# EUROPEAN PATENT APPLICATION

(11) **EP 3 330 538 A1**
(43) Date of publication of application: **06.06.2018**
(21) Application number: 17205007.2
(22) Date of filing: 01.12.2017
(51) Int. Cl.: F04B 1/04, F04B 39/00, F04B 53/14, F16J 15/46, F16J 15/56

(54) **INFLATABLE STATIC SEAL FOR A PISTON ROD OF A RECIPROCATING PUMP OR COMPRESSOR**

(30) Priority: 05.12.2016 US 201662430236 P
(71) Applicant: Compressor Products International, LLC, Stafford, TX 77477 (US)
(72) Inventor: MAHIEUX, Pascal, Stafford, Texas 77477 (US); SCHROEDER, David, Stafford, Texas 77477 (US); LEFRANCOIS, Michel, Stafford, Texas 77477 (US); BERGER, Michel, Stafford, Texas 77477 (US); ROUCHOUZE, Bruno, Stafford, Texas 77477 (US)
(74) Representative: J A Kemp

(57) **Abstract**

The present application provides a static seal assembly for a rod configured for reciprocal motion. The static seal assembly is generally sized to fit within a conventional cup of a stuffing box. The static seal assembly has a body with a base and a balloon that fit within the cup. The balloon is made of an expandable material and is selectively in fluid communication with a pressurized fluid source. When pressurized, or inflated, the balloon expands and forms a seal interface with the outer surface of the rod.

## Description

### CROSS-REFERENCE TO RELATED PATENT APPLICATIONS

The present application claims priority to United States Provisional Patent Application Serial Number 62/430,236, filed December 5, 2016, the disclosure of which is incorporated herein by reference as if set out in full.

### BACKGROUND

Compressors and other reciprocating pumps generally have a piston rod that moves into and out of a high (or low) pressure system. The pathway that the piston rod follows provides a natural leak path for the fluid (gas or liquid) into or out of the cylinder. Conventionally, rod packing has been designed to at least inhibit the leakage.

Rod packing for a reciprocating piston rod, however, is typically designed to function best while the piston rod is in use, *e.g*., having reciprocal movement. When the compressor or pump is non-operational, however, the piston rod is static or not moving. The rod packing may not seal properly when the compressor, pump, or valve, in certain embodiments, is shut down but at operating pressures. The fluid, such as for example air or natural gas, may leak past the packing rings of the rod packing to the atmosphere. At best, the leakage results in system loss that must be replaced resulting in inefficiencies. At worst, the leakage results in an environmental contamination hazard that requires reporting and/or clean up.

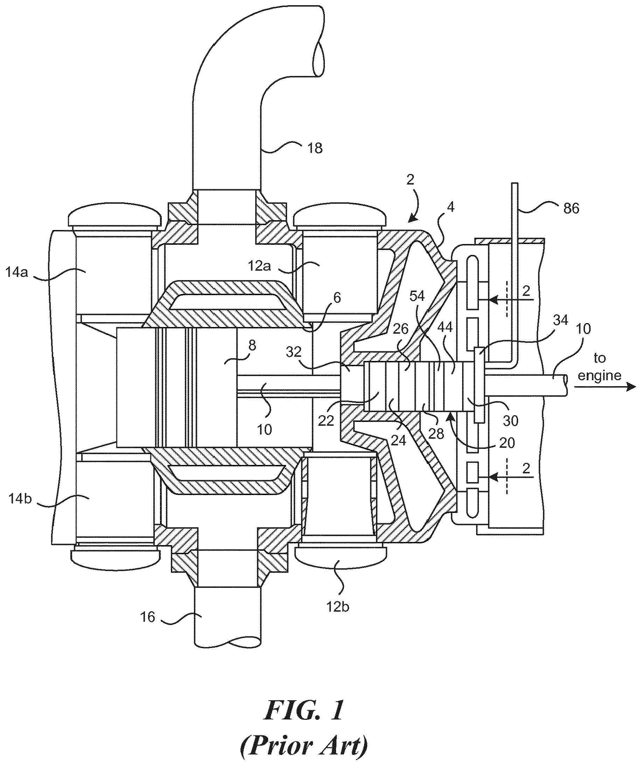

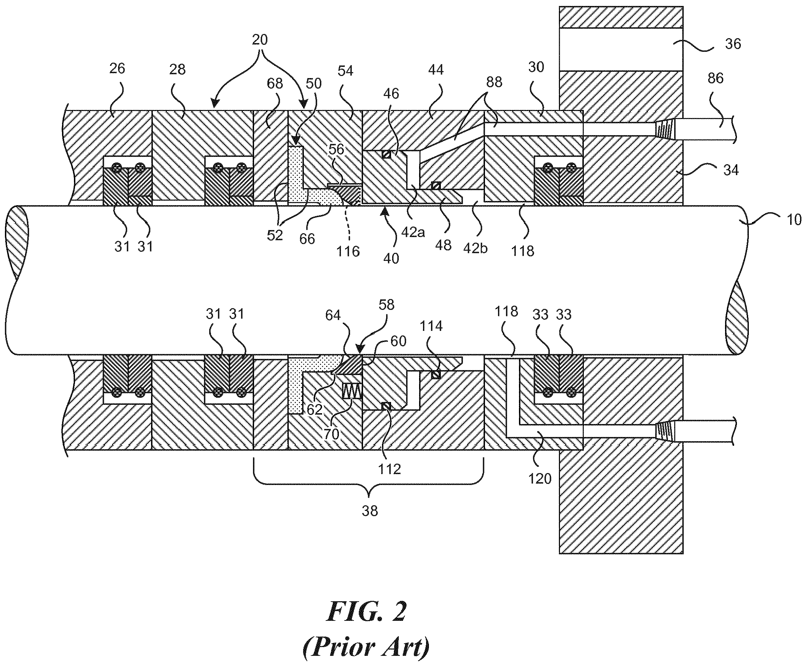

United States Patent No. 4,469,017 provides a conventional static seal to seal the leak path formed when the reciprocating rod is stationary or static. With that in mind, FIGs. 1 and 2 show a conventional industrial compressor 2 that may be used for natural gas compression. The compressor 2 has a housing 4 that defines a bore 6. A piston 8 is in the bore 6. The piston 8 is capable of reciprocal movement. A piston rod 10 is coupled to the piston 8 and extends out of the housing 4. The piston rod 10 also is configured for reciprocal movement. The piston rod 10 typically is connected to a motor that drives the reciprocal motion, which is not shown but generally understood in the art. The compressor 2 comprises conventional suction and discharge valves 12a,b and 14a,b that are in fluid communication with the bore 6. Finally, the compressor may have header inlet 16 and outlet 18.

The compressor 2 has a stuffing box 34 that that is arranged about the piston rod 10. The stuffing box 34 contains cups 22, 24, 26, 28, 30. At least one of the cups contain dynamic seals or packing rings designed to inhibit leakage along the piston rod10. Others of the cups may contain rod scrapers or the like as is generally known in the art. Interspersed with the cups 22, 24, 26, 28, and 30 are housing 44 and plate 54 associated with the static leak assembly 38 described further below.

The compressor 2, as explained above, includes the static leak assembly 38 that functions to seal the leak path along the piston rod 10 when the piston rod 10 is static or stationary, at which time the packing rings 31, 33 in cups 22, 24, 26, 28, and 30 may not function properly. The static leak assembly includes, among other things, a movable ring 40 (sometimes referred to as a piston ring), which may have a disc portion 46 and a running portion 48, is contained in a housing 44 and disposed around the piston rod 10. The running portion 48 (sometimes referred to as a follower or piston follower) may be integral with the disc portion 46 or a separate part. The movable ring 40 moves in an axial direction along the piston rod 10. A chamber 42a exists between the disc portion 46 of the movable ring 40 and the housing 44. A chamber 42b exists about the running portion 48. A biasing element 70, such as a spring, exerts a force tending to push the movable ring 40 into the chamber 42a. A gasket or sealing element 50 (sometimes referred to as a lip seal) may be coupled into the overall assembly 38. The sealing element 50 is similarly contained in a chamber 52 by a plate 54 and is movable radially about the piston rod.

A fluid port 86 is in fluid communication with the chamber 42a via a conduit 88, which may be one or more bores. When the piston rod 10 is static, fluid port 86 provides pressure to chamber 42a. The pressure on the disc portion 46 causes the movable ring 40 to compress the biasing element 70. The disc portion 46, or an optional wedge member 116, contacts the sealing element 50 and compresses the sealing element 50 to the outer surface of the piston rod 10. Thus, even if the packing rings 31, 33 do not seal properly, the sealing element 50 inhibits leakage along the piston rod surface.

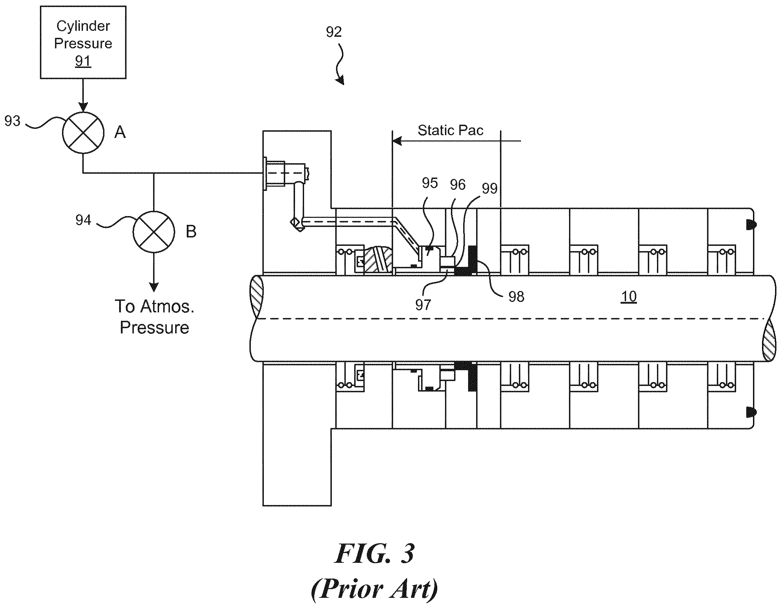

FIG. 3 is a schematic diagram representative of a static leak assembly constructed similarly to the static leak assembly shown in FIGs 1 and 2 above. A pressure source 91 is provided in fluid communication with the compressor piston rod stuffing box 92. The pressure source may be isolated using a cut off valve 93 or vented using a vent valve 94. The fluid pressure (typically air) is applied to the movable ring 95 that acts against biasing element 96. A projection 97 from the movable ring 95, which is generally wedge shaped and may be a separate piece, contacts the sealing element 98 at an interface 99. The projection 97 and sealing element 98 have cooperative shapes at the interface 99 to cause the sealing element 98 to compress onto the outer surface 10 of the piston rod forming the seal (or sealing face) between the sealing element 98 and the outer surface 10.

FIGs 1-3 provide a static sealing assembly but there are problems and limitations associated with the conventional static sealing assembly. Thus, against this background, it is desirous to have an improved static sealing assembly.

### SUMMARY

This Summary is provided to introduce a selection of concepts in a simplified form that are further described below in the Detailed Description. This Summary, and the foregoing Background, is not intended to identify key aspects or essential aspects of the claimed subject matter. Moreover, this Summary is not intended for use as an aid in determining the scope of the claimed subject matter.

In some aspects of the technology, a static seal assembly for a reciprocating rod is provided. The static seal assembly comprises a body having a cavity. A seal resides in the cavity. The seal includes a base and a balloon. The base includes an anchor to which the balloon is coupled. The balloon, along with the anchor, form an interior cavity that is configured to be selectively in fluid communication with a pressure source. When in fluid communication with the pressure source, the balloon is configured to expand and contact the reciprocating rod and form a seal. When not in fluid communication with the pressure source, the balloon is retracted and not in contact with the reciprocating rod.

These and other aspects of the present system and method will be apparent after consideration of the Detailed Description and Figures herein.

### DRAWINGS

Non-limiting and non-exhaustive embodiments of the present invention, including the preferred embodiment, are described with reference to the following figures, wherein like reference numerals refer to like parts throughout the various views unless otherwise specified.
Figure 1 is a cross-sectional view of a compressor with a conventional static sealing assembly.
Figure 2 is a cross-sectional view of a stuffing box associated with the compressor of FIG. 1.
Figure 3 is a schematic diagram of the stuffing box of figure 2.
Figure 4 is a cross-sectional view of a stuffing box with a static seal assembly consistent with the technology of the present application.
Figure 5 is a cross-sectional view of the static seal assembly of figure 4.
Figure 6 is a cross-sectional view of another configuration of the static seal assembly consistent with the technology of the present application.
Figure 7 is a schematic diagram of the stuffing box of figure 4.

### DETAILED DESCRIPTION

The technology of the present application will now be described more fully below with reference to the accompanying figures, which form a part hereof and show, by way of illustration, specific exemplary embodiments. These embodiments are disclosed in sufficient detail to enable those skilled in the art to practice the technology of the present application. However, embodiments may be implemented in many different forms and should not be construed as being limited to the embodiments set forth herein. The following detailed description is, therefore, not to be taken in a limiting sense.

The technology of the present application is described with specific reference to a static seal assembly used with a gas compressor, such as an air compressor or a natural gas compressor. However, the technology described herein may be used in other applications including fluid compressors, positive displacement pumps, other devices with a reciprocal motion, and the like. For example, the technology of the present application may be applicable to a static seal for a turbine or the like. Moreover, the technology of the present application will be described with relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein should be considered exemplary.

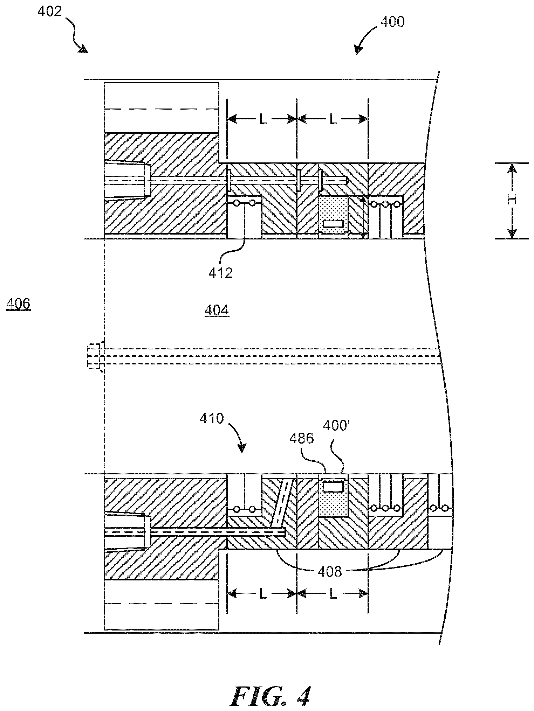

With reference now to FIG. 4, a static seal assembly 400 consistent with the technology of the present application is shown. FIG. 4 is a cross-sectional view of a portion of a stuffing box 402 associated with the piston rod 404 of a fluid compressor 406, such as a gas compressor 406 as shown (which is only shown in concept not detail). The fluid compressor 406 may be any number of conventional fluid compressors as are generally known in the art. Other equipment with reciprocally moving parts may be substituted for the fluid compressor described herein, such as a reciprocating pump or valve. The static seal assembly 400 in certain applications may be used with valve packing as the valve stem has a reciprocal motion.

The stuffing box 402 has a number of cups 408 having an axial length L and a radial height H, sometimes referred to as cups. The cups 408 have cavities 410, in which the dynamic seal assemblies 412 are placed. One type of exemplary packing used as a dynamic seal assembly 412 is described in United States Provisional Patent Application Serial Number 62/337,635, filed May 17, 2016, and United States non-Provisional Patent Application Serial Number 15/592,391, filed May 11, 2017, both of which are titled Rod Packing, and incorporated herein by reference as if set out in full. As may now be appreciated, the static seal assembly 400, which includes a body 401, may be configured with an axial length L and a radial height H, which generally matches the axial length L and the radial height H of a standard cup 408, unlike the more conventional static sealing assembly described above with reference to FIG. 1-3 that are typically over the standard cup size (often more than twice the axial length (2L)). Conventional cups are about 33 mm and conventional static sealing assemblies (as described above with FIGs. 1-3) are about 68 mm. The static sealing assembly of the present application can be configured with a length of about 33 mm, which facilitates incorporation of the static sealing assembly into conventional cup spaces in a packing assembly.

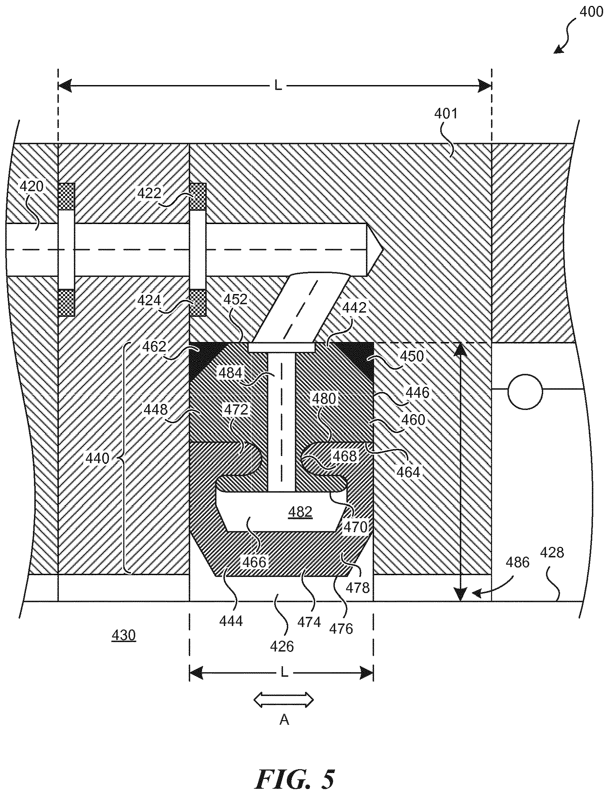

The static seal assembly 400, shown in isolation in FIG. 5, includes a fluid conduit or fluid pathway 420 formed in the body 401. The fluid conduit 420 is in fluid communication with a pressure source (not specifically shown, but generally known in the art as explained above with reference to FIGs. 1-3). The body 401 may include a recess 422 formed about the fluid conduit 420 to receive a compressible gasket 424, such as, for example, an o-ring or the like. The fluid conduit may be a bore formed into the packing cup such as by milling or the like. The fluid conduit generally extends axially for a portion of the axial length L of the static seal assembly 400 and radially to a body cavity 426 (or cavity) formed in the body 401. The cavity 426 oepns to an inner radial surface of the body. The cavity 426 extends a portion, or extends part way, of the radial height H into the body 401. The cavity 426 is open to the outer surface 428 of a rod 430 that is configured for reciprocal movement in the axial direction as shown by double arrow A.

A seal 440 resides in the cavity 426. The seal 440 includes a base 442 and a balloon 444 that are coupled together, as will be explained further below. The balloon 444 portion of the seal 440 is called a balloon because it expands when pressurized fluid enters the balloon 444 and contracts when the balloon 444 is vented or otherwise depressurized. In other words, the seal and balloon have a pressurized position forming a seal interface between the balloon and the rod, and a depressurized position disengaging the seal interface between the balloon and the rod. A leak path 446 may exist along a surface 448 of the cavity 426 between the surface 448 and the seal 440. The leak path 446 may be sealed by adhering, for example, the base 442 to the surface 448 or by a pair of o-rings 450, as shown along the floor 452 of the cavity 426. Both the base 442 and the balloon 444 may be formed from elastomers. In certain embodiments, the base 442 and the balloon 444 may be a contiguous or unitary material. In some embodiments, the base 442 may be formed from metals, such as, for example, stainless steel or the like. In some embodiments, the balloon 444 may be formed from, among other things, Silicone, natural and synthetic rubbers, and the like. Some exemplary materials include:

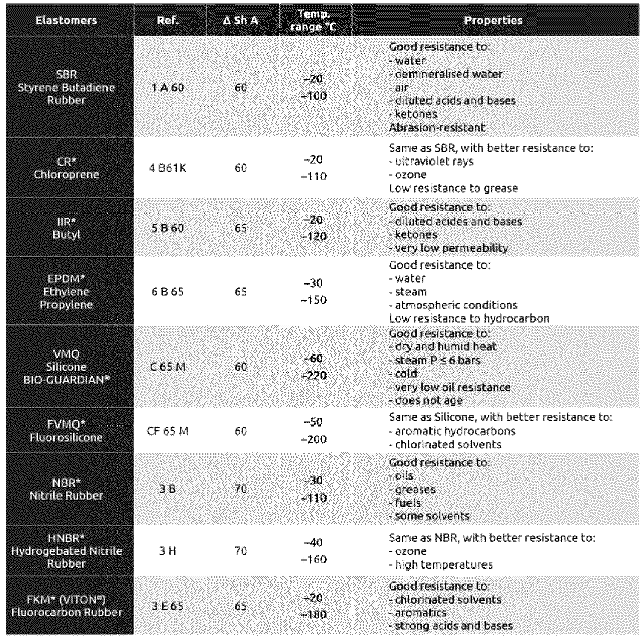

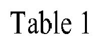

The base 442 and the balloon 444 are coupled together with a tongue and groove connection, a press-fit connection, a snap-fit connection or the like. One possible coupling is shown in FIG. 5. In some embodiments, the balloon 444 may be welded, glued, adhered, or cured to base 442.

The base 442 has an anchor 460 part with a first end 462 radially distal to the rod 430 and a second end 464, opposite the first end, radially proximal to the rod 430. The second end 464 has a pedestal 466 extending radially from the second end 464 towards the rod 430. The pedestal has a column 468 and a laterally extending surface 470, which forms a channel 472, which may be referred to as a groove. As shown, the laterally extending surface 470 extends away from the column 468 in the left and right direction (as shown by the cross-section figure, but the reference to left and right directions not to be considered limiting) such that the channel 472 is actually a pair of channels on opposite sides of the column (or wall) 468.

The balloon 444 comprises a U shaped member 474. Roughly, the balloon 444 comprises a seal wall 476 proximal the rod 430. A pair of legs (or walls) 478 extend radially from the seal wall 476 towards the second end 464 of the anchor 460. Each wall terminates in a axially extending protrusion 480 extending inwardly towards the column 468 and operatively sized to fit within the channels 472. The protrusions 480 may be considered a tongue and the channels 472 may be considered a groove to form a tongue and groove connection. To connect the balloon 444 and the base 442, the pair of legs 478 may be plastically deformed to allow the protrusions to fit past the extending surface 470. Once past the extending surface 470, the pair of legs 478 return to the non-deformed configuration to form a press-fit, friction fit, snap-fit, or the like between the base 442 and the balloon 444. Further adhesives, glues, welds (heat or sonic) may be used to facilitate the connection.

The balloon 444 together with the extending surface 470 define an interior cavity 482. The base 442 has a fluid pathway 484 extending through the anchor 460 and the column 468 and is in fluid communication with the interior cavity 482. The fluid pathway 484, which may be a bore or the like, places the fluid conduit 420, and the pressure source, in fluid communication with the interior cavity 482. Pressurizing the interior cavity 482 causes the balloon 444 to extend in a direction toward the rod 430 (as other expansion paths are blocked) until the seal wall 476 contacts the rod 430's outer surface forming a seal interface 486 (see static seal assembly 400' in FIG. 4). The seal interface 486 is proximal an inner radial surface of the static seal assembly 400. The seal wall 476 may be textured or ridged to allow compression of the texture and/or ridge to form a more positive seal as the interior cavity 482 is pressurized. Depressurization of the interior cavity 482 causes the balloon 444 to retract away from the rod 430 allowing a gap during normal reciprocating motion (see static seal assembly 400 in FIG. 4). Because the balloon 444 is pressurized to expand, the static seal assembly 400 is sometimes referred to as an inflatable seal.

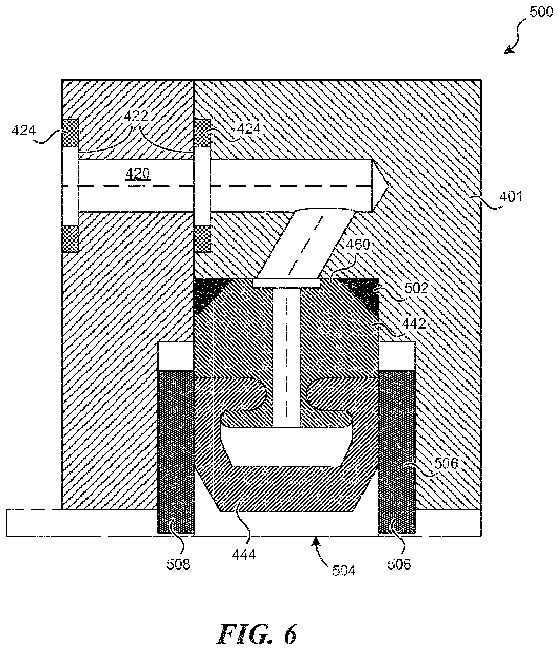

FIG. 6 shows a static seal assembly 500, which is similar to the static seal assembly 400. The static seal assembly 500 includes a body 401 having a countersink 502 in a base of a cavity 504. The countersink 502, which may be referred to as a channel or groove, is sized to cooperatively receive the anchor 460 of base 442. As can be appreciated, the countersink 502 is smaller in width than the width of the cavity 504. To constrain the expansion of the balloon 444, spacers 506 may be coupled to the side wall or bore wall 508 of the cavity. The spacers 506 may be made from metal, such as the aforementioned stainless steel, or polymers, such as for example, PEEK® or the like, and are designed to be freely rotating.

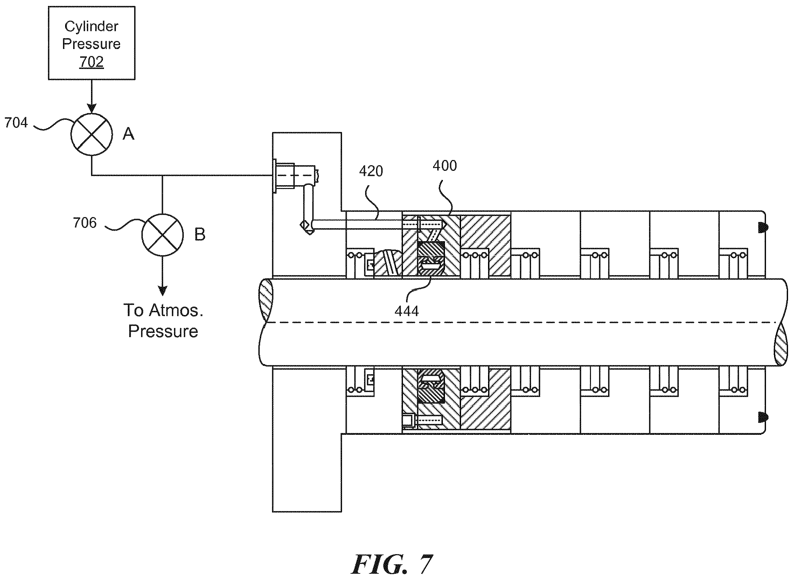

FIG. 7 shows a schematic diagram of a stuffing box 700 consistent with the technology of the present application. The control system includes a pressure source 702 coupled to the fluid conduit 420. A cut off valve 704 places the pressure source 702 in fluid communication with the static seal assembly 400, 500 to pressurize the balloon 444. A vent valve 706 vents the static seal assembly 400, 500 to atmosphere. The control schemas for the operation of the cut off valve 704 and vent valve 706 are generally known in the art and not specifically shown herein.

Although the technology has been described in language that is specific to certain structures and materials, it is to be understood that the invention defined in the appended claims is not necessarily limited to the specific structures and materials described. Rather, the specific aspects are described as forms of implementing the claimed invention. Because many embodiments of the invention can be practiced without departing from the spirit and scope of the invention, the invention resides in the claims hereinafter appended. Unless otherwise indicated, all numbers or expressions, such as those expressing dimensions, physical characteristics, etc. used in the specification (other than the claims) are understood as modified in all instances by the term "approximately." At the very least, and not as an attempt to limit the application of the doctrine of equivalents to the claims, each numerical parameter recited in the specification or claims which is modified by the term "approximately" should at least be construed in light of the number of recited significant digits and by applying ordinary rounding techniques. Moreover, all ranges disclosed herein are to be understood to encompass and provide support for claims that recite any and all subranges or any and all individual values subsumed therein. For example, a stated range of 1 to 10 should be considered to include and provide support for claims that recite any and all subranges or individual values that are between and/or inclusive of the minimum value of 1 and the maximum value of 10; that is, all subranges beginning with a minimum value of 1 or more and ending with a maximum value of 10 or less (e.g., 5.5 to 10, 2.34 to 3.56, and so forth) or any values from 1 to 10 (e.g., 3, 5.8, 9.9994, and so forth).

## Claims

1. A static seal assembly (400, 400') for sealing a rod (404) configured for reciprocal motion, comprising
a body (401);
a body cavity (426) defined by the body, the body cavity configured to open on an inner radial surface and extend part way into the body;
a seal (440) coupled to the body and residing in the body cavity, the seal comprising an expandable balloon (444) having an interior cavity (482), the expandable balloon having a seal wall (476) that is configured with a pressurized position and a depressurized position, when in the pressurized position, the seal wall expands in the cavity to be proximal the inner radial surface of the seal assembly and is configured to form a sealing interface (486) with the rod and, when in the depressurized position, the seal wall is configured to disengage the sealing interface with the rod; and
a fluid pathway (420) in the body configured to place a pressure source in fluid communication with the interior cavity of the balloon.

2. The seal assembly of claim 1 wherein the seal further comprises an anchor (460) and the balloon is coupled to the anchor and wherein the fluid pathway (420, 484) extends through the anchor to the interior cavity of the balloon.

3. The seal assembly of claim 1 or 2 wherein the body cavity comprises a bore and a countersink (502) and wherein the seal is sized to cooperatively engage the within the countersink, wherein the seal assembly further comprises at least one spacer (506) operatively sized to fit within the body cavity between a bore wall (508) and the seal assembly.

4. The seal assembly of claim 2 or 3 wherein the anchor comprises a base (442) and a pedestal (466) and the balloon is coupled to the pedestal.

5. The seal assembly of any one of claims 2-4 wherein the anchor comprises a column (468) extending radially inward and a laterally extending surface (470) at an inward end of the column forming a groove (472) between the laterally extending surface and the base.

6. The seal assembly of claim 5 wherein the expandable balloon comprises at least one leg (478) coupled to the seal wall and a protrusion (480) coupled to the leg at an end opposite the seal wall such that the protrusion extends into the groove to couple the expandable balloon to the anchor.

7. The seal assembly of any preceding claim wherein the expandable balloon is formed from at least one of silicone, natural rubber, synthetic rubber, or a combination thereof.

8. The seal assembly of any one of claims 2-7 wherein one or more gaskets (450) are between the anchor and the body.

9. The seal assembly of any preceding claim formed in a stuffing box (402) contained in a housing, the stuffing box comprising a plurality of cups (408), the stuffing box containing the fluid conduit wherein at least a first cup of the plurality of cups comprising a dynamic seal assembly (412) and at least a second cup of the plurality of cups comprising a static seal assembly, the static seal assembly comprising:

10. The apparatus of claim 9 wherein the first cup and the second cup have the same axial length and the same radial height.

11. The apparatus of any one of claims 4-10 wherein the base is formed from the same material as the balloon and wherein the balloon is formed from at least one of silicone, natural rubber, or synthetic rubber.

12. The apparatus of any one of claims 4-10 wherein the base is formed from a metal, a composite, or a combination thereof and the balloon is formed from at least one of silicone, natural rubber, or synthetic rubber.

13. A method of sealing a rod (404) configured for reciprocal motion when the rod is not moving comprising:
providing an inflatable seal assembly (400, 400') in a stuffing box (402) containing the rod wherein the inflatable seal is contained in a cavity (410) in a cup (408) of the stuffing box;
placing the inflatable seal assembly in fluid communication with a pressurized fluid source; and
inflating the inflatable seal assembly such that the inflatable seal expands radially inwardly within the cavity of the cup until a sealing interface (486) is formed between an outer surface of the rod and a seal wall (476) of the inflatable seal assembly.

14. The method of claim 13 further comprising the step of stopping the reciprocal motion of the rod at substantially the same time or prior to placing the inflatable seal assembly in fluid communication with the pressurized fluid source.

15. The method of claim 13 or 14 further comprising the step of deflating the inflatable seal assembly and starting the reciprocal motion of the rod.
